# EUROPÄISCHE PATENTSCHRIFT

(11) **EP 1 894 717 B1**
(45) Veröffentlichungstag und Bekanntmachung des Hinweises auf die Patenterteilung: **17.06.2009**
(21) Anmeldenummer: 06017945.4
(22) Anmeldetag: 29.08.2006
(51) Int. Cl.: B32B 37/10, B30B 1/32

(54) **Presse und Verfahren zum Laminieren plattenförmiger Werkstücke mittels Druck und Wärme**
Press and method for laminating plate-like workpieces under heat and pressure
Presse et procédé pour laminer à chaud et sous pression des objets en forme de plaques

(43) Veröffentlichungstag der Anmeldung: 05.03.2008
(73) Patentinhaber: Robert Bürkle GmbH, 72250 Freudenstadt (DE)
(72) Erfinder: Renz, Wolfgang, 72250 Freudenstadt (DE)
(74) Vertreter: Lemcke, Brommer & Partner

(56) Entgegenhaltungen:
- US-A- 5 578 159
- PATENT ABSTRACTS OF JAPAN -& JP 2001 026027 A (MEIKI), 30. Januar 2001 (2001-01-30)
- PATENT ABSTRACTS OF JAPAN -& JP 2003 181697 A (SANEE GIKEN), 2. Juli 2003 (2003-07-02)

## Beschreibung

Die Erfindung betrifft eine Presse zum Laminieren plattenförmiger Werkstücke mittels Druck und Wärme sowie ein Verfahren zur Verwendung dieser Presse nach den Oberbegriffen der Ansprüche 1 und 7.

Eine entsprechende Presse umfasst demnach einen oberen Presstisch mit einer oberen Pressplatte sowie einen unteren Presstisch mit einer unteren Pressplatte, wobei mindestens eine der beiden Pressplatten beheizbar ist. Eine umlaufende Dichtung, die am oberen Presstisch bzw. der oberen Pressplatte, oder aber am unteren Presstisch angebracht ist, bildet bei geschlossener Presse eine nach Außen abgedichtete Vakuumpresskammer, so dass das Werkstück unter Vakuum laminiert werden kann. Die umlaufende Dichtung kann auch zweiteilig ausgebildet und einerseits am oberen Presstisch bzw. der oberen Pressplatte sowie andererseits am unteren Presstisch angebracht sein, so dass die beiden Teile der Dichtung beim Schließen der Presse in Anlage miteinander kommen. Um die Vakuumpresskammer evakuieren zu können, sind Mittel zum Evakuieren der durch die Dichtung gebildeten Vakuumpresskammer vorgesehen.

Pressen dieser Art werden vornehmlich zum Laminieren von Leiterplatten mit gedruckten Schaltungen eingesetzt. Hierbei wird ein plattenförmiges Werkstück, bestehend aus zwei Kupferfolien und mindestens einer Innenlage aus mit Harz getränktem Glasfasergewebe, einem so genannten Prepreg, in die Presse eingebracht und unter Einwirkung von Hitze, um die typische Schmelztemperatur des Harzes zu erreichen, und Druck laminiert. Das schmelzende Harz des Prepregs sorgt beim gegebenen Pressdruck für eine innige Verbindung zwischen den einzelnen Lagen des Werkstücks. Je nach Werkstück sind zwischen den beiden äußeren Kupferfolien typischerweise bis zu 40 strukturierte Innenlagen im Prepreg vorhanden.

Es hat sich gezeigt, dass die zur Erzielung zufriedenstellender Ergebnisse mit einem solchen Laminierverfahren erforderlichen Presszeiten vorteilhaft verkürzt werden können, wenn das Heißpressen unter Vakuum erfolgt. Ein derartiges Verfahren ist beispielsweise aus der DE 42 32 610 A1 bekannt geworden. Das dort beschriebene Laminierverfahren arbeitet mit Presszeiten zwischen einer und drei Minuten bei einer Presstemperatur von 175°C bis 250°C und typischen Pressdrücken von 350 bis 1.000 N/cm² während in der Vakuumpresskammer ein Druck von etwa 0,05 bar herrscht.

Die in der DE 42 32 610 A1 beschriebene Presse weist an ihrer oberen Pressplatte randseitig umlaufend einen Abdichtungsrahmen auf, der beim Schließen der Presse in Anlage mit der unteren Pressplatte kommt und ausreichend elastisch verformbar ist, um einerseits eine Abdichtung des Raums zwischen den beiden Pressplatten zu einer Vakuumpresskammer zu gewährleisten und andererseits die Pressbewegung der beiden Pressplatten zueinander nicht zu behindern.

Im bisherigen Stand der Technik hängt es teilweise von Zufällen ab, in welcher Abfolge die Erwärmung des Werkstücks und die Evakuierung der Vakuumpresskammer erfolgen. Es bietet jedoch Vorteile, wenn zunächst die Vakuumpresskammer geschlossen und evakuiert wird, ohne das Werkstück mit einer beheizten Pressplatte in Anlage zu bringen, und erst danach, nachdem das Vakuum definiert hergestellt ist, das Werkstück heiß zu verpressen. In diesem Zusammenhang ist es aus der JP-A-2003181697 bekannt, die untere Pressplatte relativ zum unteren Presstisch anhebbar auszubilden, und zwar so, dass ein Schließen der Presse nur zu einem Schließen der Vakuumpresskammer führt, jedoch noch nicht zu einer Anlage der unteren und oberen Pressplatte aneinander bzw. am Werkstück. Erst das separat mögliche Anheben der unteren Pressplatte bei bereits geschlossener Presse führt dann zur Anlage des Werkstücks an die beiden Pressplatten sowie zur Übertragung der Prozesswärme auf das Werkstück und zur Ausübung des Pressdrucks.

Durch diese Maßnahmen wird gegenüber dem bisher bekannten Stand der Technik eine höhere Prozesssicherheit erzielt, da eine definierte Abfolge der Prozessschritte des Evakuierens und des Heißverpressens reproduzierbar gegeben ist. Darüber hinaus wird hierdurch ermöglicht, das Laminierverfahren mit kleineren Pressdrücken bei gleichbleibenden kurzen Taktzeiten durchzuführen, und dies bei tendenziell besserer und konstanter Qualität.

Der vorliegenden Erfindung liegt die Aufgabe zugrunde, ein Verfahren und eine presse der oben beschriebenen Art hinsichtlich der Arbeitsergebnisse weiter zu verbessern.

Gelöst ist diese Aufgabe durch eine Presse mit den Merkmalen des Anspruchs 1 sowie ein Verfahren mit den Merkmalen des Anspruchs 7.

Bevorzugte Ausgestaltungen der Presse finden sich in den Ansprüchen 2 bis 6; bevorzugte Ausgestaltungen des Verfahrens sind in den Ansprüchen 8 und 9 niedergelegt.

Die vorliegende Erfindung zeichnet sich also dadurch aus, dass die untere, anhebbare Pressplatte auf dem unteren Presstisch schwimmend gelagert ist und insbesondere mittels eines fluidbeaufschlagten Druckraums zwischen dem unteren Presstisch und der unteren Pressplatte angehoben wird. Hierdurch werden etwaige Unebenheiten des Werkstücks sowie Toleranzen der Pressplatten, die durch die Heizzyklen gegebenenfalls noch verstärkt werden, automatisch ausgeglichen.

Zur Bildung des Druckraums kann eine Membran vorgesehen sein, die mit einem Fluid beaufschlagt wird. Der Druckraum kann auch durch ein an sich bekanntes Druckkissen gebildet werden.

Um die erfindungsgemäße Presse im Kurztaktverfahren zu betreiben, ist es vorteilhaft, wenn zwischen der unteren und der oberen Pressplatte ein endloses Transportband hindurchläuft. Das Werkstück kann dann auf dem Transportband aufliegend in die Presse verbracht, die Presse geschlossen, evakuiert und die untere Pressplatte angehoben werden, wobei das Werkstück weiterhin auf dem Transportband aufliegt. Nach Öffnen der Presse kann das laminierte Werkstück dann mit dem Transportband aus der Presse heraustransportiert werden. Hierbei ist es dann sinnvoll, das Werkstück zwischen zwei Trennblechen anzuordnen, damit das Harz nicht mit dem Transportband in Berührung kommt.

Die Presse ist vorzugsweise mit einem anhebbaren und absenkbaren oberen Presstisch ausgestattet, wobei eine Kolben-Zylinder-Einheit für die Auf- und Abbewegung des oberen Presstischs sorgt. Gleichzeitig kann die obere Pressplatte beheizt sein, was es besonders einfach macht, das Werkstück beim Schließen der Presse und Abdichten der Vakuumpresskammer zunächst nicht mit der beheizten Pressplatte in Anlage zu bringen.

Insbesondere bei Verwendung eines umlaufenden Transportbandes kann jedoch auch die untere Pressplatte beheizt sein, da das Werkstück dann bei geschlossener Presse und abgedichteter Vakuumpresskammer auf dem Transportband aufliegen kann, ohne dieses bereits mit der untere Pressplatte in Berührung zu bringen.

Ein Ausführungsbeispiel für eine erfindungsgemäße Presse ist im Folgenden anhand der beigefügten Zeichnungen näher beschrieben und erläutert. Es zeigen:
- Figur 1: eine seitliche Schnittdarstellung einer erfindungsgemäß ausgestalteten Presse;
- Figur 2: ein vergrößerter Ausschnitt aus Figur 1.

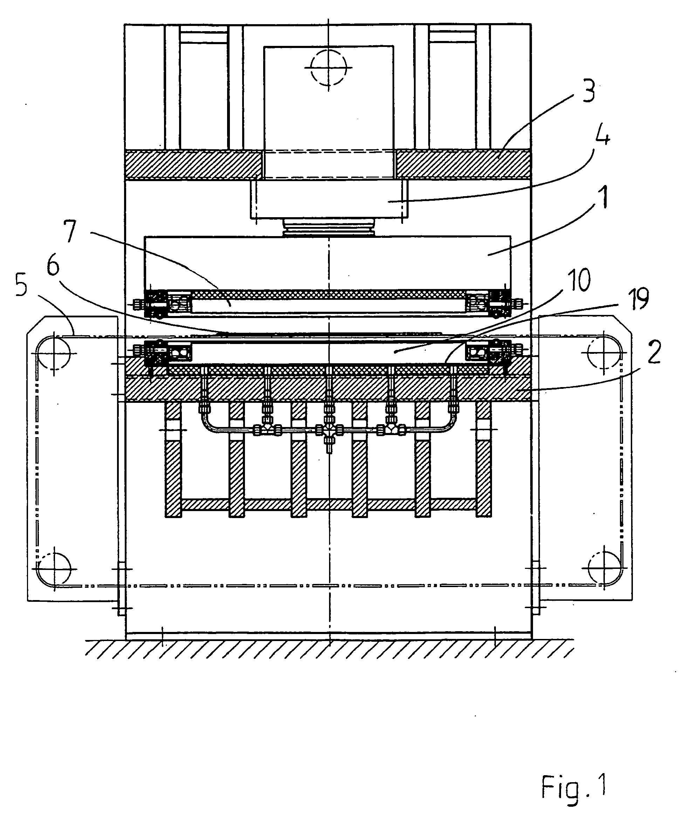

Die in Figur 1 dargestellte Presse umfasst einen oberen Presstisch 1 und einen unteren Presstisch 2, wobei der untere Presstisch 2 ortsfest in einem Pressengestell 3 gelagert ist. Im Pressengestell 3 ist eine hydraulische Kolben-Zylinder-Einheit 4 befestigt, an welcher der obere Presstisch 1 angebracht ist. Mittels der Kolben-Zylinder-Einheit 4 kann der obere Presstisch 1 auf und ab bewegt werden. Ein Transportband 5 läuft endlos zwischen den oberen und unteren Presstischen 1, 2 durch, um ein Werkstück 6 in die Presse hinein und aus dieser heraus zu transportieren. Während des Pressens verbleibt das Transportband 5 naturgemäß in der Presse.

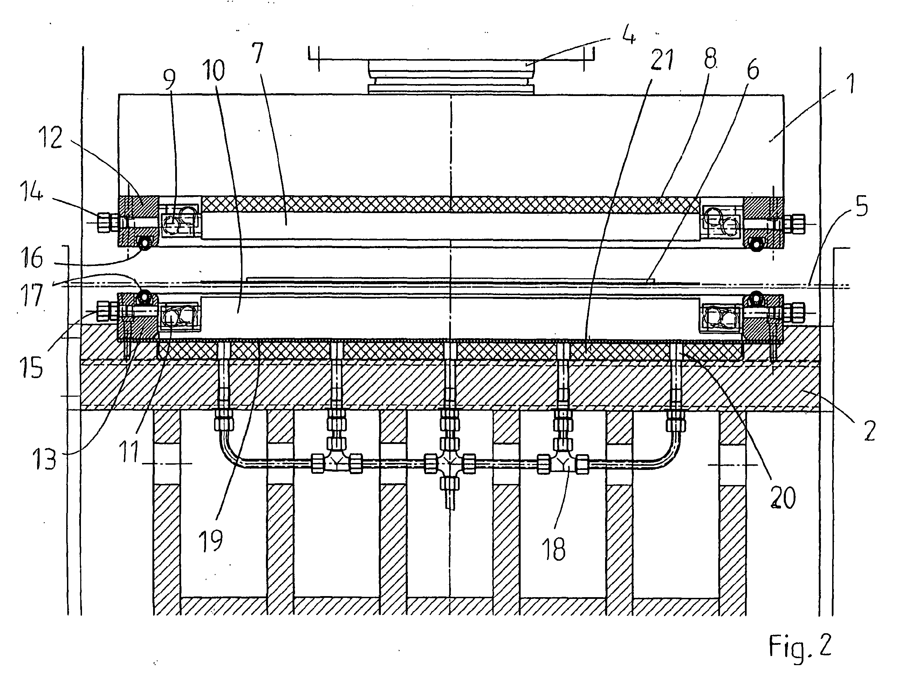

Anhand Figur 2, eines vergrößerten Ausschnittes aus Figur 1, lassen sich die Verhältnisse in der Presse besser erkennen. Der obere Presstisch 1 trägt eine beheizte obere Pressplatte 7, die über eine Isolierschicht 8 am oberen Presstisch 1 befestigt ist. Mittels flexibler Anschlüsse 9 wird in an sich bekannter Weise ein Wärmefluid in die obere Pressplatte 7 eingebracht, um diese permanent auf Prozesstemperatur zu halten. Der untere Presstisch 2 trägt seinerseits eine untere Pressplatte 10, die ebenfalls beheizt ist und flexible Anschlüsse 11 für ein Wärmefluid aufweist.

Sowohl die obere Pressplatte 7 als auch die untere Pressplatte 10 sind von einem am jeweiligen Presstisch 1, 2 fest angebrachten, umlaufenden oberen Rahmen 12 und unteren Rahmen 13 umgeben, die Anschlussarmaturen 14 und 15 für die Anschlüsse 9 und 10 des Wärmefluids tragen. Sowohl der obere Rahmen 12 als auch der untere Rahmen 13 tragen außerdem jeweils eine weichelastische Dichtung 16 und 17, die zusammen die beiden Teile einer umlaufenden Dichtung bilden. Denn beim Schließen der Presse durch Absenken des oberen Presstischs 1 gelangen die beiden Dichtungen 16 und 17 untereinander in Anlage und dichten, da sie rundum umlaufend angebracht sind, das Innere der Presse mit dem innenliegenden Werkstück 6, also insbesondere den Raum zwischen den beiden Pressplatten 7 und 10, gegen die Umgebung luftdicht ab. Die Rahmen 12 und 13 am oberen Presstisch 1 bzw. am unteren Presstisch 2 liegen bei geschlossener Presse aneinander, so dass eine weitere Bewegung der Kolben-Zylinder-Einheit 4 gestoppt wird.

Die gezeigte Presse ist so ausgestaltet, dass bei einer geschlossenen Presse weder die obere Pressplatte 7 noch die untere Pressplatte 10 am Werkstück 6 anliegt. Dieses liegt vielmehr noch ohne Wärmekontakt mit den beheizten Pressplatten 7 und 10 auf dem Transportband 5 auf.

Eine (nicht dargestellte) Absaugeinrichtung evakuiert sodann über (wiederum nicht dargestellte) Anschlüsse den Rahmen 12 bzw. 13 den mittels der Dichtungen 16 und 17 abgedichteten Innenraum zwischen den beiden Pressplatten 7 und 10. Die Dichtungen 16 und 17 bilden dann also den Rand einer Vakuumpresskammer.

Die untere Pressplatte 10 ist erfindungsgemäß schwimmend gelagert und dementsprechend nicht am unteren Presstisch 2 befestigt. Sie liegt vielmehr auf einer Membran 19 auf, unterhalb der eine Anzahl von Druckluftöffnungen 20 einer durch den unteren Presstisch 2 geführten Druckluftversorgung 18 münden. Die Membran 19 ist ihrerseits mittels einer unteren Isolierschicht 21 hinsichtlich einer Wärmeleitung vom unteren Presstisch 2 entkoppelt. Durch Aktivieren der Druckluftversorgung 18 wird (hier nicht dargestellt) die Membran 19 kissenförmig nach oben gedrückt, wodurch sich die untere Pressplatte 10 anhebt. Durch dieses Anheben wird letztendlich das Werkstück 6 zwischen die untere Pressplatte 10 und die obere Pressplatte 7 gepresst und sowohl mit Wärme als auch mit Pressdruck beaufschlagt. In diesem Moment ist das Vakuum in der Vakuumpresskammer bereits voll ausgebildet.

Mit der in den Figuren 1 und 2 dargestellten Presse ist also das erfindungsgemäße, zweistufige Laminierverfahren, bei dem zunächst eine Vakuumpresskammer geschlossen und evakuiert und dann erst das Werkstück mit Hitze und Druck beaufschlagt wird, zu verwirklichen. Nach dem Heißverpressen, das typischerweise in einem kurzen Presstakt von einer bis drei Minuten erfolgt, wird die Presse wieder geöffnet und das Werkstück 6 mit dem Transportband 5 heraustransportiert. Danach kann ein weiterer erfindungsgemäßer Pressentakt mit einem neuen Werkstück erfolgen.

Es versteht sich, dass die erfindungsgemäße Presse nicht auf das dargestellte Ausführungsbeispiel beschränkt ist, sondern dass verschiedene Variationen im Rahmen der Erfindung liegen. Beispielsweise könnte lediglich die obere Pressplatte beheizt sein, um zu ermöglichen, das Werkstück in wärmeleitendem Kontakt mit der unteren Pressplatte in die Presse einzulegen. Auch die Ausbildung des Dichtrahmens kann in unterschiedlicher Weise erfolgen, beispielsweise kann die Dichtung direkt an den Pressplatten angebracht sein, und die Mittel zur Evakuierung können anders ausgebildet sein.

## Patentansprüche

1. Presse zum Laminieren plattenförmiger Werkstücke mittels Druck und Wärme, umfassend
- einen oberen Presstisch (1) mit einer oberen Pressplatte (7) und einen unteren Presstisch (2) mit einer unteren Pressplatte (10), wobei die obere und/oder die untere Pressplatte (7, 10) beheizbar sind,
- eine am oberen Presstisch (1) oder der oberen Pressplatte (7) und/oder am unteren Presstisch (2) angebrachte, ein- oder zweiteilige umlaufende Dichtung (16, 17) zur Bildung einer Vakuumpresskammer bei geschlossener Presse,
- Mittel (4) zum Öffnen und Schließen der Presse,
- Mittel zum Evakuieren der durch die Dichtung (16, 17) gebildeten Vakuumpresskammer,
- sowie eine Pressensteuerung, die so ausgestaltet und programmiert ist, dass sie nach dem Einlegen eines Werkstücks (6) in die Presse zunächst die obere (7) und die untere Pressplatte (10) so weit aufeinander zu bewegt, bis die Dichtung (16, 17) die Vakuumpresskammer schließt, dann die Mittel zum Evakuieren der Vakuumpresskammer aktiviert und nach dem Evakuieren der Vakuumpresskammer die untere Pressplatte (10) relativ zum unteren Presstisch (2) anhebt, um das Werkstück (6) in Anlage an die obere (7) und die untere Pressplatte (10) zu bringen,
- wobei die untere Pressplatte (10) relativ zum unteren Presstisch (2) anhebbar und derart angeordnet ist, dass ein in der Presse befindliches Werkstück (6) bei geschlossener Vakuumpresskammer zunächst nicht in Anlage an die beheizte Pressplatte (7, 10) gelangt,
**dadurch gekennzeichnet,**
**dass** die untere Pressplatte (10) auf dem unteren Presstisch (2) schwimmend gelagert ist.

2. Presse nach Anspruch 1,
**dadurch gekennzeichnet,**
**dass** zwischen dem unteren Presstisch (2) und der unteren Pressplatte (10) ein fluidbeaufschlagter Druckraum zum Anheben der unteren Pressplatte (10) angeordnet ist.

3. Presse nach Anspruch 2,
**dadurch gekennzeichnet,**
**dass** zur Bildung des Druckraums eine Membran (19) vorgesehen ist.

4. Presse nach einem der Ansprüche 2 oder 3,
**dadurch gekennzeichnet,**
**dass** der Druckraum durch ein Druckkissen gebildet ist.

5. Presse nach mindestens einem der Ansprüche 1 bis 4,
**dadurch gekennzeichnet,**
**dass** sie mit einem endlosen Transportband (5) versehen ist, das zwischen der oberen Pressplatte (7) und der unteren Pressplatte (10) hindurchläuft.

6. Presse nach mindestens einem der Ansprüche 1 bis 5,
**dadurch gekennzeichnet,**
**dass** die Mittel zum Öffnen und Schließen der Presse eine Kolben-Zylinder-Einheit (4) umfassen, die den oberen Presstisch (1) anhebt und absenkt.

7. Verfahren zum Laminieren plattenförmiger Werkstücke mittels Druck und Wärme, insbesondere unter Verwendung der Presse nach mindestens einem der Ansprüche 1 bis 6, mit den Verfahrensschritten:
- Einbringen des Werkstücks (6) in eine geöffnete Presse mit einer oberen Pressplatte (7) und einer unteren Pressplatte (10), von denen mindestens eine beheizt ist,
- Schließen der Presse unter Ausbildung einer Vakuumpresskammer zwischen den Pressplatten (7, 10), ohne das Werkstück (6) mit der beheizten Pressplatte in Anlage zu bringen,
- Evakuieren der Vakuumpresskammer,
- Anheben der unteren Pressplatte (10), um das Werkstück (6) in Anlage sowohl an die obere (7), als auch an die untere Pressplatte (10) zu bringen und
- Beaufschlagen des Werkstücks (6) mit dem Pressdruck,
**dadurch gekennzeichnet,**
**dass** die untere Pressplatte (10) durch Einleiten eines Fluids in einen zwischen dem unteren Presstisch (2) und der unteren Pressplatte (10) befindlichen Druckraum angehoben wird.

8. Verfahren nach Anspruch 7,
**dadurch gekennzeichnet,**
**dass** das Werkstück (6) mittels eines zwischen der oberen und der unteren Pressplatte (7, 10) durchlaufenden Transportbandes (5) in die Presse eingebracht wird.

9. Verfahren nach einem der Ansprüche 7 oder 8,
**dadurch gekennzeichnet,**
**dass** die Werkstücke (6) zwischen zwei Trennblechen angeordnet in die Presse eingebracht werden.

## Claims

1. Press for laminating board-like workpieces by means of pressure and heat, comprising
- an upper pressing table (1) with an upper pressing plate (7) and a lower pressing table (2) with a lower pressing plate (10), wherein the upper and/or the lower pressing plate (7, 10) can be heated,
- a peripheral seal (16, 17) comprising one or two parts is provided on the upper pressing table (1) or the upper pressing plate (7) and/or on the lower pressing table (2) in order to form a vacuum pressure chamber when the press is closed,
- means (4) for opening and closing the press,
- means for evacuating the vacuum pressure chamber formed by the seal (16, 17),
- as well as a press controller which is configured and programmed in such a way that after the insertion of a workpiece (6) into the press first of all it moves the upper pressing plate (7) and the lower pressing plate (10) towards one another until the seal (16, 17) closes the vacuum pressure chamber, then the controller activates the means for evacuating the vacuum pressure chamber and after the evacuation of the vacuum pressure chamber it raises the lower pressing plate (10) relative to the lower pressing table (2) in order to bring the workpiece (6) into contact with the upper pressing plate (7) and the lower pressing plate (10),
- wherein the lower pressing plate (10) is disposed so that it can be raised relative to the lower press plate (2) in such a way that a workpiece (6) located in the press does not initially contact the heated pressing plate (7, 10) when the vacuum pressure chamber is closed,
**characterised in that** the lower pressing plate (10) is mounted floating on the lower pressing table (2).

2. Press as claimed in Claim 1, **characterised in that** a pressure chamber supplied with fluid is disposed between the lower pressing table (2) and the lower pressing plate (10) in order to raise the lower pressing plate (10).

3. Press as claimed in Claim 2, **characterised in that** a membrane (19) is provided in order to form the pressure chamber.

4. Press as claimed in either Claim 2 or Claim 3, **characterised in that** the pressure chamber is formed by a pressure pad.

5. Press as claimed in any one of Claims 1 to 4, **characterised in that** it is provided with a continuous conveyor belt (5) which runs between the upper pressing plate (7) and the lower pressing plate (10).

6. Press as claimed in any one of Claims 1 to 5, **characterised in that** the means for opening and closing the press comprise a piston-cylinder unit (4) which raises and lowers the upper pressing table (1).

7. Method of laminating board-like workpieces by means of pressure and heat, in particular using the press as claimed in at least one of Claims 1 to 6, with the method steps:
- introducing the workpiece (6) into an open press with an upper pressing plate (7) and a lower pressing plate (10), at least one of which is heated,
- closing the press and forming a vacuum pressure chamber between the press plates (7, 10) without bringing the workpiece into contact with the heated pressing plate,
- evacuating the vacuum pressure chamber,
- raising the lower pressing plate (10) in order to bring the workpiece (6) into contact with both the upper pressing plate (7) and the lower pressing plate (10), and
- supplying the workpiece (6) with pressure,
**characterised in that** the lower pressing plate (10) is raised by introduction of a fluid into a pressure chamber located between the lower pressing table (2) and the lower pressing plate (10).

8. Method as claimed in Claim 7, **characterised in that** the workpiece (6) is introduced into the press by means of a conveyor belt (5) running between the upper and the lower pressing plates (7, 10).

9. Method as claimed in either Claim 7 or Claim 8, **characterised in that** the workpieces (6) disposed between two separating sheets are introduced into the press.

## Revendications

1. Presse de laminage de pièces en forme de plaques, sous l'action de la pression et de la chaleur, comprenant
- un plateau supérieur de pressage (1) muni d'une plaque supérieure de pressage (7) et un plateau inférieur de pressage (2) doté d'une plaque inférieure de pressage (10), ladite ou lesdites plaque(s) de pressage supérieure et/ou inférieure (7, 10) pouvant être chauffée(s),
- une garniture périphérique d'étanchement (16, 17) en une ou deux partie(s), implantée sur le plateau supérieur de pressage (1) ou sur la plaque supérieure de pressage (7) et/ou sur le plateau inférieur de pressage (2), en vue de former une chambre de pressage par dépression à l'état fermé de la presse,
- des moyens (4) d'ouverture et de fermeture de ladite presse,
- des moyens de mise sous vide de la chambre de pressage par dépression formée par la garniture d'étanchement (16, 17),
- ainsi qu'une commande de la presse, agencée et programmée de façon telle que, à l'issue de l'insertion d'une pièce (6) dans ladite presse, elle rapproche tout d'abord l'une de l'autre les plaques de pressage supérieure (7) et inférieure (10), jusqu'à ce que la garniture d'étanchement (16, 17) ferme la chambre de pressage par dépression ; active ensuite les moyens de mise sous vide de ladite chambre de pressage par dépression ; puis soulève la plaque inférieure de pression (10) vis-à-vis du plateau inférieur de pression (2), après la mise sous vide de ladite chambre de pressage par dépression, de manière à amener ladite pièce (6) en applique contre lesdites plaques de pressage supérieure (7) et inférieure (10),
- sachant que la plaque inférieure de pressage (10) peut être soulevée vis-à-vis du plateau inférieur de pressage (2) et occupe une position telle qu'une pièce (6), située dans la presse, ne vienne tout d'abord pas en applique contre la plaque de pressage chauffée (7, 10) lorsque la chambre de pressage par dépression se trouve à l'état fermé,
**caractérisée par le fait**
**que** la plaque inférieure de pressage (10) est montée flottante sur le plateau inférieur de pressage (2).

2. Presse selon la revendication 1,
**caractérisée par le fait**
**qu'**une chambre de pression, sollicitée par un fluide, est interposée entre le plateau inférieur de pressage (2) et la plaque inférieure de pressage (10) en vue de soulever ladite plaque inférieure de pressage (10).

3. Presse selon la revendication 2,
**caractérisée par le fait**
**qu'**une membrane (19) est prévue pour former la chambre de pression.

4. Presse selon l'une des revendications 2 ou 3,
**caractérisée par le fait**
**que** la chambre de pression est formée par une poche de pression.

5. Presse selon au moins l'une des revendications 1 à 4,
**caractérisée par le fait**
**qu'**elle est munie d'une bande convoyeuse sans fin (5), en défilement entre la plaque supérieure de pressage (7) et la plaque inférieure de pressage (10).

6. Presse selon au moins l'une des revendications 1 à 5,
**caractérisée par le fait**
**que** les moyens d'ouverture et de fermeture de ladite presse comprennent un vérin (4) qui soulève et abaisse le plateau supérieur de pressage (1).

7. Procédé de laminage de pièces en forme de plaques sous l'action de la pression et de la chaleur, notamment en utilisant la presse selon au moins l'une des revendications 1 à 6, comprenant les étapes opératoires suivantes :
- insertion de la pièce (6) dans une presse ouverte offrant une plaque supérieure de pressage (7) et une plaque inférieure de pressage (10) dont au moins l'une est chauffée,
- fermeture de ladite presse en formant une chambre de pressage par dépression, entre les plaques de pressage (7, 10), sans mettre ladite pièce (6) en applique contre la plaque de pressage chauffée,
- mise sous vide de ladite chambre de pressage par dépression,
- soulèvement de la plaque inférieure de pressage (10) pour amener la pièce (6) en applique tant contre la plaque supérieure de pressage (7), que contre la plaque inférieure de pressage (10), et
- sollicitation de ladite pièce (6) par la pression de pressage,
**caractérisé par le fait**
**que** la plaque inférieure de pressage (10) est soulevée par admission d'un fluide dans une chambre de pression située entre le plateau inférieur de pressage (2) et ladite plaque inférieure de pressage (10).

8. Procédé selon la revendication 7,
**caractérisé par le fait**
**que** la pièce (6) est insérée dans la presse au moyen d'une bande convoyeuse (5) défilant entre les plaques de pressage supérieure et inférieure (7, 10).

9. Procédé selon l'une des revendications 7 ou 8,
**caractérisé par le fait**
**que** les pièces (6) sont insérées, dans la presse, en étant interposées entre deux tôles séparatrices.
